Europäisches Patentamt

European Patent Office

Office européen des brevets

(19)

(11) Veröffentlichungsnummer : **0 477 203 B1**

(12) **EUROPÄISCHE PATENTSCHRIFT**

(45) Veröffentlichungstag der Patentschrift :
**15.09.93 Patentblatt 93/37**

(21) Anmeldenummer : **90908156.4**

(22) Anmeldetag : **05.06.90**

(86) Internationale Anmeldenummer :
**PCT/AT90/00054**

(87) Internationale Veröffentlichungsnummer :
**WO 90/14935 13.12.90 Gazette 90/28**

(51) Int. Cl.⁵ : **B27N 3/28,** B29C 67/22,
C08J 9/12, C08L 97/02

(54) **VERFAHREN ZUR HERSTELLUNG VON NEUEN FORMKÖRPERN, INSBESONDERE FÜR STRUKTURELEMENTE, ISOLIERUNGEN UND/ODER VERPACKUNG, VORRICHTUNG ZUR DURCHFÜHRUNG DES VERFAHRENS SOWIE INSBESONDERE DANACH BZW. DAMIT ERHALTENER FORMKÖRPER.**

(30) Priorität : **07.06.89 AT 1392/89**

(43) Veröffentlichungstag der Anmeldung :
**01.04.92 Patentblatt 92/14**

(45) Bekanntmachung des Hinweises auf die
Patenterteilung :
**15.09.93 Patentblatt 93/37**

(84) Benannte Vertragsstaaten :
**AT BE CH DE DK ES FR GB IT LI LU NL SE**

(56) Entgegenhaltungen :
**EP-A- 0 113 595
EP-A- 0 201 625
CH-A- 405 685
DE-A- 1 653 263**

(56) Entgegenhaltungen :
**DE-A- 1 704 754
Patent Abstracts of Japan, vol. 8, No: 22
(M-272) (1459), 31 January 1984, & JP, A,
58183242 (NAGOYA YUKAGAKU KOGYO K.K.)
26 October 1983 see abstract.**

(73) Patentinhaber : **M. Kaindl
Walser Weg 12
A-5071 Wals (AT)**

(72) Erfinder : **RETTENBACHER, Markus
Parkstrasse 1/8
A-5020 Salzburg (AT)**

(74) Vertreter : **Brauneiss, Leo et al
Patentanwälte Dipl.-Ing. Leo Brauneiss
Dipl.-Ing. Dr. Helmut Wildhack Landstrasser
Hauptstrasse 50 Postfach 281
A-1031 Wien (AT)**

EP 0 477 203 B1

EP 0 477 203 B1

## Beschreibung

Gegenstand der Erfindung ist ein Verfahren zur Herstellung von Bau-, Struktur- oder Verpackungsmaterial vorzugsweise von Span- und/oder Faserprofilen und/oder -platten, unter Bildung von Formkörpern, Anlagen zu deren Erzeugung und die Verwendung der Formkörper.

E sind viele Verfahren bekannt geworden, die es ermöglichen, biopolymerhaltige Produkte aufzuschließen, um sie in einem gesonderten weiten Arbeitsschritt weiter, z.B. zu Holzfaserplatten, zu verarbeiten. Dies erfolgt entweder mit Aufschließung durch Dampf und anschließende Druckentlastung oder durch mechanische Zerkleinerung. Meist wird eine Kombination dieser beiden Verfahren angewandt. Gravierende Nachteile dieser Verarbeitungsmethoden sind der hohe Energieeinsatz und eine nur chargenweise Verarbeitung der anfallenden Zwischenprodukte.

Es sind auch Verfahren bekanntgeworden, bei denen eine Extrusion einer Masse mit Harz und Holzschnitzeln zur Herstellung von Struktur-Platten erfolgt. Dabei müssen speziell konstruierte Extruder, insbesondere Extruderschnecken, zum Einsatz gelangen. Meist ist nur die Herstellung von Halbfertigprodukten angesprochen, jedoch nie die Erzielung eines Endproduktes in einem einzigen Arbeitsgang. Auch der Aufwand, für diese Produkte eigene Maschinen einsetzen zu müssen, verteuert die auf den bekannten Anlagen mittels Extrusion produzierten Platten, Wandelemente u.dgl.

Stellvertretend für bekannte Extrusionsverfahren zur Herstellung von Platten und Profilen aus lignozellulosehaltigem Material, insbesondere Holzschnitzel, sei die DE-A1 1 653 263 genannt, gemäß welcher nasses zerspantes Rohmaterial zuerst im Trocknungsmischer auf gewünschte Feuchte gebracht und danach in mindestens einem Beleimungsmischer gemischt wird und erst nach einem mit einem Bindemittel - es sind dort konkret Leime angeführt - vorgenommenen eigenen Benetzungsschritt mit kontinuierlich einstellbarem Druck in einer Schneckenpresse unter Regulierung der Temperaturen zum fertigen Produkt kontinuierlich verpreßt wird.

Zur Herstellung eines zigarettenähnlichen Genußmittels ist das Konzept bekannt, eine wasserfeuchte Mischung aus natürlichem faserförmiförmigen Material und Stärke in einem Extruder bis zum Gelschmelzen der Stärke zu verdichten und danach zu entspannen, wobei ein schaumstoffartiges Produkt aus natürlich abbaubaren Stoffen entsteht, vgl. EP-A 113 595.

Bekannt ist es weiters aus US-A 4 3S7 194, eine Mischung aus natürlichem faserförmigem oder faserhaltigem Material und Stärke oder Zucker zu verdichten und mit Dampf zu erhitzen um so Spanplatten mit natürlich abbaubaren Stoffen ohne die Verwendung von künstlichem Leim (Kunststoffe) zu gewinnen.

Weiterhin beschreibt die US-A 4 627 951 Verfahren, natürliches, zuckerhaltiges, faserförmiges Material ohne Dampf und ohne Hinzufügen von Leimen in beheizten Plattenpressen zu verdichten und daraus Spanplatten mit natürlich abbaubaren Stoffen zu erhalten.

Nachteil der nach dem bisher bekanntgewordenen Verfahren produzierten Span-Platten ist ihre hohe Dichte, die beispielsweise schon bei Kleinmöbeln zu hohem Gewicht und Unhandlichkeit führt, weiters sind sie für Wärme-Isolierungszwecke, z.B. Boden-, Wand- und Deckenplatten, Dachbodenausbauten u.dgl. wenig geeignet.

Ein weiteres großes Gebiet stellt die Produktion von Isolierplatten - vornehmlich geringer Dichte - der in ihren Eigenschaften breit variierbaren Schaum-Kunststoffe dar, deren Porigkeit mittels gasabspaltenden Primärkomponenten oder Zusätzen erzielt wird. Nachteile sind deren bei geringeren Dichten stark sinkenden mechanischen Festigkeiten, Leichtschmelzbarkeit und -brennbarkeit, unzureichende Chemikalienresistenz und nicht zuletzt deren ungünstigen Abbau-Eigenschaften nach Entsorgung. Umweltprobleme können im übrigen, wie bekannt, auch bei den obenbeschriebenen Faserplatten schon der bei ihrer Produktion durch die die dabei eingesetzten Chemikalien und auch selbst während ihres bestimmungsgemäßen Einsatzes auftreten.

Die Erfindung hat sich nun die Aufgabe gestellt, bei Vermeidung der Nachteile bisher bekannter Verfahren und Produkte auf diesem Sektor unter Einsatz allgemein üblicher Extrusionsanlagen ohne einen Schritt einer vorherigen Beleimung der span- bzw. faserförmigen Materialien ein Verfahren zu schaffen, das die Erzeugung der wie eingangs beschriebenen Produkte im wesentlichen in einem Arbeitsgang unter Verwendung umweltfreundlicher Ausgangsstoffe erlaubt. Dabei sollen Produkte erhalten werden, die sich durch höhere Isotropie und damit gleichmäßigere physikalische Eigenschaften als die bisher bekannten Platten und weiters durch geringere Dichten bei gleichzeitig hoher mechanischer Stabilität auszeichnen.

Gemäß der Erfindung gelangt man auf besonders vorteilhafte Weise zu den neuen Produkten, wie dies im kennzeichnenden Teil des Anspruches 1 angegeben ist.

Besonders wesentlich ist hiebei die Ausbildung eines echten Schmelze-Gels durch Anwendung von Druck und Temperatur, wobei die bevorzugterweise stärkehaltigen oder andere schmelzebildungsfähige Bindemittel-Materialien, zu denen im übrigen auch Stärke selbst zu zählen ist, gleich in fester stückiger Form, als z.B. ganze Reiskörner, gegebenenfalls gleich mit den Schalen, diese gleich als Faser-Material-Anteil, bloß gleichmäßig

2

gemischt mit dem restlichen biogenen Span- bzw. Fasermaterial, also z.B. Holzschnitzel, Stroh, Pappe, Papier od.dgl. nach Einstellung der entsprechenden Feuchte direkt in den Extruder eingespeist werden können. Damit ist eine Produktion in praktisch einem Arbeitsgang möglich. Zu den biogenen hochmolekularen Materialien sollen außer den zerspanten zerkleinerten, zerfaserten, faserartigen, faserhältigen und faserförmigen oben angeführten Materialien auch faserartige Moleküle aufweisende Stoffe, wie z.B. Kautschuk od.dgl. gezählt sein.

Durch die Überführung des als Feststoff zugeführten Bindemittels in schmelze-gelartige Konsistenz ist trotz der unmittelbar folgenden Expansion eine unproblematische Verarbeitung mit vielen verschiedenen Extrudertypen möglich. Das Produkt wird durch die Einbindung der verwendeten biogenen Materialien, z.B. Holzschnitzel, in diese hochviskose Phase geglättet, der Prozeß ist gut zu beherrschen und liefert Produkte mit gefälliger Oberfläche, geringer Dichte und hoher Festigkeit. Die Ausbildung dieser gelartigen Konsistenz kann auch durch Zusatzstoffe unterstützt werden, die diese Eigenschaft selbst nicht besitzen, sie jedoch an einer der anderen Komponenten, z.B. in den Holzschnitzeln, bei der intensiven Bearbeitung im Extruder hervorrufen, wie z.B. Zellulose-Quell- oder Lösemittel.

Die gemäß der Erfindung hergestellten neuen Produkte haben den besonderen Vorteil, daß ihre spezifische Masse durch die Veränderung des Expansionsgrades, der über Druck und Temperatur in weiten Bereichen beeinflußbar ist, gesteuert werden kann und auf diese Weise eine im Gewicht wesentlich leichtere Holzfaserplatte herstellbar ist, bei der nur geringe Festigkeitseinbußen zu beobachten sind.

Sofort nach Verlassen des Extruders, der Auspreß-Düsen jeder bekannten Form, insbesondere eine Flachdüse, aufweisen kann, beginnt das Gel, insbesondere Stärkegel, bei gleichzeitiger innerer Expansion des gespannten Dampfes der der Grundmasse innewohnenden Feuchte infolge der Abkühlung mit seinem Übergang in eine Art Glaszustand. Durch Einstellung von Feuchte, Stärkeanteil, Biopolymer-Angebot, sowie der Betriebsbedingungen können diese beiden konkurrierend ablaufenden Vorgänge zum Erhalt hervorragender Endprodukte präzise aufeinander abgestimmt werden. Schließlich besteht ein wesentlicher Vorteil darin, daß durchaus und ohne Einsatz zusätzlicher Chemikalien für eine Gasentwicklung oder -abspaltung, aus der der Grundmasse, also z.B. den Holzschnitzeln und/oder der Stärke, innewohnenden Feuchte die Expansion zur gewünschten Dichte des Endproduktes erreicht werden kann.

Besonders vorteilhaft kann die Erfindung auch für die Herstellung von Verpackungsfüllstoffen und Einweg-Wärmeisolierbehältern, z.B. für warme Imbißspeisen od.dgl., eingesetzt werden. Die so erhaltenen Produkte zeichnen sich durch konsumentenfreundliches Aussehen und hohe Stoßdämpf- und elastische Eigenschaften aus, was insbesondere bei Verpackungsfüllstoffen, z.B. in Kugel- oder Chipsform, aber auch bei Umhüllungselementen oder -folien von wichtiger Bedeutung ist. Ein weiterer Vorteil ist ihre "krispe" Konsistenz, was ihre Zerkleinerung, z.B. bei Entsorgung und damit auch ihre naturnahe Verrottung, wesentlich erleichtert.

Bei einer vorteilhaften Arbeitsweise gemäß Anspruch 2 mit den dort genannten Bindemitteln und beim Arbeiten gemäß Anspruch 3 mit den dort angeführten Pflanzenfaser-Materialien, werden einerseits hochwertige Span- bzw. Faserprodukte erzielt, andererseits läßt sich eine hohe Flexibilität bei der Wahl der Ausgangskomponenten und bei der Qualität der expandierten Endprodukte selbst, erzielen, was insbesondere auch wirtschaftliche Vorteile bringt.

Wenn die Einstellung der Prozeßtemperaturen, wie gemäß Anspruch 4 vorgesehen, vorgenommen wird, kann der Feuchte auf günstige Weise jene innere Energie erteilt werden, die eine kontrollierte Expansion bei konkurrierender Erstarrung der Masse zur gewünschten Dichte ermöglicht. Bei Einhaltung der Druckverhältnisse im Sinne dieses Anspruches ist eine gezielte Expansion mit Vorteil besonders einfach erreichbar.

Bei einer weiteren, bevorzugten Arbeitsweise gemäß Anspruch 5, wird eine gesonderte Einrichtung zur Beheizung der Masse im Extruder verzichtbar, darüber hinaus wird infolge eines dabei eintretenden Kanten-, Ecken- und Spitzen-Abrundungseffektes am stückigen faserhältigen Material eine wie schon oben kurz erwähnte "glatte" Konsistenz der Grundmasse an der Düse erreicht, welche die Probleme der Extrusion grobstückigerer Füllstoffe enthaltender schmelzkonsistenter Massen minimiert.

Durch eine Druckentlastung zum Erhalt der bevorzugten Werte des Expansions-Index gemäß Anspruch 6 lassen sich vorteilhaft "leichte", jedoch strukturfeste Platten und Profile erzielen.

Bei Einsatz des biopolymeren Bindemittels in den im Anspruch 7 angegebenen, zu bevorzugenden Mengenbereichen, können bei hoher Variationsbreite bezüglich der einsetzbaren span- bzw. faserhaltigen Materialien die nötige Verarbeitbarkeit der Grundmasse und immer ausreichende mechanische Eigenschaftswerte der schließlich erhaltenen Leicht-Struktur-Elemente erreicht werden.

Um den Expansions-Vorgang auf vorteilhafte Weise besonders variabel steuerbar zu gestalten, können, wie im Anspruch 8 angegeben, die dort genannten Substanzen zur Unterstützung der Expandier-Wirkung der Feuchte der Grundmasse selbst zusätzlich eingesetzt werden.

Wenn in bevorzugter Weise Formkörper, wie Platten und Profile mit wasserabstoßenden, und damit mikrobiellen Befall hintanhaltenden Modifikatoren gemäß Anspruch 9 produziert werden, können hohe Lebensdauer und dennoch spätere unproblematische Entsorgung erreicht werden. So können beispielsweise durch Einbringen von Kautschuk- oder Silikon-Molekülen Formkörper geringerer Dichte mit weicher, jedoch formbeständiger und sogar elastischer Konsistenz erhalten werden.

Ähnliches gilt auch für die günstige Vorgangsweise gemäß Anspruch 10, bei der infolge des direkten Einbaus der Modifikatoren in die Bindemittelmolekülstruktur selbst eine Erhöhung der Lebensdauer, aber in bevorzugter Weise auch eine Modifikation des Erscheinungsbildes der neuen Formkörper erzielbar ist.

Bei der ebenfalls vorteilhaften Arbeitsweise gemäß Anspruch 11 lassen sich Formkörper mit beispielsweise im Vergleich zum Grundkörper strapazfähigerer, elastischer oder andersartiger "Rinde", "Haut" bzw. Oberflächenschicht erzielen. Die gemäß diesem Anspruch auch vorgesehene Beaufschlagung mit einem Kleber, wie z.B. heißvernetzende Harze od.dgl., kann vorteilhaft im Hinblick auf eine nach der Extrusion vorzunehmende Beschichtung - wie sie aus der Span- und Strukturplatten-Produktion bekannt ist - erfolgen.

Zur Erzeugung von mit Oberflächen-Beschichtungen - z.B. für Dekorzwecke - versehenen platten, Profilen u.dgl. kann man günstigerweise auch so verfahren, wie es der Anspruch 12 beschreibt, wobei der Vorteil gegeben ist, daß die Extrusionseinrichtung nicht für eine Zuführung einer Beschichtungsmasse, noch bevor die Grundmasse den Extruder verlassen hat, umgestaltet werden muß.

Bei einer Arbeitsweise gemäß Anspruch 13 lassen sich in vorteilhafter Weise selbst bei an sich unvermeidlichen Schwankungen der eingesetzten Rohmaterialien, deren Partikel- bzw. Korngröße, Feuchte usw., maßgenaue Formkörper erzielen.

Wenn man zur Produktion beschichteter Platten bzw. Profile nach Art des Anspruches 4 vorgeht, ist eine technisch einfache, kostensparende Kombination der Gewährleistung der gewünschten Stangenprofil-Maßgenauigkeit mit den Vorteilen einer genau auf spätere Verwendungszwecke abgestimmten Oberflächen-Veredlung gegeben.

Weiterer wesentlicher und bevorzugter Gegenstand der Erfindung ist eine Vorrichtung zur Herstellung der beschriebenen Formkörper mit Einrichtungen zur Zerkleinerung und/oder Konditionierung und/oder Vormischung der bevorzugt in festem Zustand vorliegenden, bevorzugt stückigen bzw. kleinteiligen Ausgangs-Komponenten und Einrichtungen für deren dosierte Zuführung zu einer Extrusionseinrichtung, insbesondere Mehr-Schnecken-Extruder, mit gegebenenfalls wechselnde Ganghöhen und/oder konische Ausbildung, aufweisenden Schnecken und zumindest einer formgebenden, bevorzugt flachrechteckigen, Extrusionsöffnung.

Sie weist die im Kennzeichen des Anspruches 15 zusammengefaßte Kombination von Merkmalen auf. Eine derartig gestaltete Extrusionsanlage bringt den Vorteil einer besonders genauen Steuerbarkeit der Dimension der expandierten Werkstücke und eine "glattere" Verarbeitungstechnik. Erreicht wird die partielle Druckentlastung durch entsprechende vergrößerte Ganghöhen aufweisende Bereiche der Schnecke bzw. durch Vorsehen größerer "freier" Fördervolumina zwischen rotierender Schnecke und Extruderwandung.

Besonderer Vorteil einer weiteren bevorzugten Vorrichtungs-Ausführungsform gemäß Anspruch 16 ist ihr einfacher Aufbau, der eine gute Dimensionsgenauigkeit bei dem in der Produktion an sich dimensionsmäßig nicht ganz einfach steuerbaren Produkt zu gewährleisten imstande ist.

Bei der besonderen Ausführungsweise gemäß Anspruch 17 ist der Vorteil gegeben, daß bei einfachem Aufbau ein eigener Antrieb zur strangbewegungs-konformen Bewegung von Begrenzungselementen entfallen kann.

Werden höhere Ansprüche an Oberflächen-Ebenheit od.dgl. gestellt, wird mit Vorteil eine aufwendigere Ausführungsform der Produktions-Anlage gemäß Anspruch 18 zum Einsatz gelangen.

Eine interessante Reduktion des für eine Folienbeschichtung der Formkörper sonst notwendigen technischen Aufwandes läßt sich mit einer Ausführungsvariante gemäß Anspruch 19 erzielen, bei welcher eine hohe Dimensionspräzision mit einer Oberflächenveredlung kombinierbar sind.

Probleme mit dem Aufbringen einer Nicht-Folien-Beschichtung, also z.B. einer Beschichtungsmasse oder eines derartigen Pulvers, gerade zu dem Zeitpunkt, wenn nach Verlassen der Extrusionsdüse die Expansion einsetzt und sich fortsetzt, lassen sich vermeiden, wenn die erfindungsgemäße Vorrichtung wie gemäß Anspruch 20 vorgesehen ausgestaltet ist.

Anhand der Zeichnung werden die Erfindung und insbesondere zu ihrer Realisierung bevorzugte Vorrichtungs-Varianten erläutert:

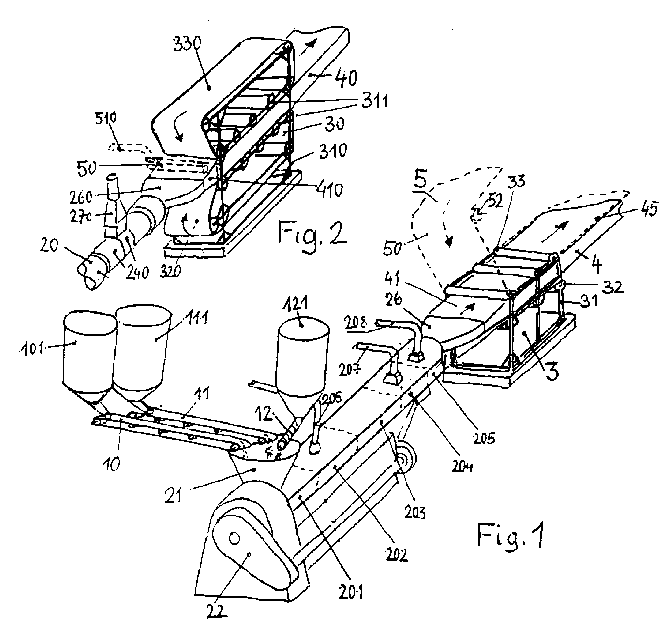

Es zeigen Fig.1 in Schrägansicht die wichtigsten Teile einer erfindungsgemäßen Anlage zur Produktion von expandierten Faserplatten mit einer Querschnittsprofil-Begrenzungseinrichtung auf Basis von Walzen, und Fig.2 einen Ausschnitt einer ebenfalls erfindungsgemäßen Anlage mit einer jeweils als Endlosbänder ausgebildete Wandelemente aufweisenden Profil-Begrenzungseinrichtung.

Gemäß Fig.1 werden aus Vorratsbehältern 101,111 und 121 über Dosierbänder 10 und 11 sowie eine Dosierschnecke 12 in dieser Reihenfolge Holzschnitzel, stärkehaltiges Bindemittel und "Zusätze" - alle jeweils in fester stückiger bzw. kleinteiliger Form - in den Vorratstrichter 21 der Extruder-Anlage 2 eingetragen. Von diesem aus wird die Masse kontinuierlich in den Arbeitsraum einer Zwei-Schneckenpresse 2 mit Antrieb 22 eingebracht, wobei in der unmittelbar an den Trichter 21 anschließenden Einzugszone 201 des Extruders eine Vormischung der Ausgangskomponenten erfolgt, in der daran anschließenden Abdichtungszone 202 einerseits ein "Zurückdampfen" hintangehalten wird und anderseits eine erste Vorverdichtung der Grundmasse erfolgt. In diese Zone 202 mündet eine Leitung 206, durch welche beispielsweise Wasser zur Einstellung einer jeweils vorgesehenen Gesamtfeuchte der Grundmasse zugeführt werden kann. In der folgenden Extruderzone 203 - hier als "Scherungszone" bezeichnet - erfolgt insbesondere durch entsprechende Ausgestaltung der Schnecke ein hoher Energieeintrag unter kräftiger Druck- und Temperaturerhöhung in der Grundmasse. Die der Scherungszone 203 folgende Weiterverarbeitungszone 204 weist eine Zuführung 207, beispielsweise für die Zufuhr eines Hydrophobierungsmittels für das Bindemittel, auf und dient einer Beruhigung der nun geschmolzenen Grundmasse, der Einbringung von Bindemittelmodifikatoren oder aber - in der Weise, daß dort z.B. eine Erweiterung der Schneckenganghöhen oder eine Reduktion der Anzahl der Windungen im Falle einer Mehrgangschnecke vorgesehen ist, mit der Folge, daß dort eine erste, partielle Vorexpansion und auch "Glättung" der Grundmasse eintritt. In die materialstromabwärts anschließende Ausstoßzone 205 mündet eine weitere Zuleitung 208, über welche zu der sich im "Schmelze-Gel-Zustand" befindlichen Masse zur Modifikation ihrer Oberfläche ein Materialeintrag erfolgen kann, z.B. zur Außenbeschichtung der zu produzierenden Platten, ein hitzevernetzender Kunststoff. Schließlich wird die Grundmasse durch die - hier flachrechteckige - beheizbare Extruderdüse 26 ausgepreßt, und es beginnt als Folge der Druckentlastung unmittelbar die spontane Expansion des Flachstranges 4 infolge Verdampfung eines Teiles der ihm innewohnenden Feuchte mit dessen kontinuierlicher "Verdickung" unter Verringerung der Dichte im Bereich 41 nach Verlassen der Flachdüse 26.

Zur Begrenzung der Platten-Stärke ist eine Strangprofil-Begrenzungseinrichtung 3 vorgesehen, deren Gestell 31 vorteilhaft gegeneinander verschiebliche und lagegenau positionierbare, einander gegenüber angeordnete obere und untere Walzen 33 und 32 aufweist, zwischen denen der infolge der Viskositätserhöhung durch Abkühlung nun nur mehr äußerst langsam sich ausdehnende Strang geführt und profilgenau gestaltet und so gehalten wird, sodaß schließlich eine "Endlos-Platte" mit gewünschter Dicke erhalten wird. Danach erfolgt ein Zuschnitt zur jeweils vorgesehenen platten-Größe und gegebenenfalls ein Finishing, z.B. durch oberflächliche Hydrophobierung od.dgl.

Bei entsprechender Ausbildung der Oberflächen der bevorzugt silikon- oder teflonbeschichteten Walzen 32 und 33, lassen sich Platten mit jeweils gewünschter Oberflächenstruktur herstellen.

Mit unterbrochenen Linien ist in Fig.1 weiters gezeigt, wie über eine Umlenkrolle 52 einer nicht näher gezeigten Folienbeschichtungseinrichtung 5 eine Beschichtungsfolie 50 am Ende des Expansionsbereiches 41 gegen die Oberseite des Stranges 4 geführt, nochmals um die erste der oberen Walzen 33 des Profilbegrenzungs-Walzenstuhls 3 umgelenkt, und schließlich zwischen Strang 4 und die oberen Walzen 33 eingezogen wird. Durch druckbeaufschlagte Einbringung eines Klebers über die Zuleitung 208 vor der Düse 26 in den Bereich 205 des Extruders, z.B. über einen an der Zylinderinnenseite angeordneten, zu den Schnecken hin offenen Ringkanal, kann die Oberfläche des Stranges 4 mit einer "Klebeschicht" versehen werden, mittels welcher die in das Walzengerüst 3 eingezogene Folie 50 unter Ausbildung einer Folienschicht 45 ortsfest an die Oberfläche der Platte 40 gebunden werden kann.

Eine der gezeigten Zuführung einer Folie 50 analoge Einrichtung kann selbstverständlich auch zur Beschichtung der Plattenunterseite vorgesehen sein.

Die in Fig.2 gezeigte Profilquerschnitts-Begrenzungseinrichtung 30 weist an einem Gerüst 310 gelagerte Rollen 311 zur Führung eines oberen und eines unteren Endlos-Bandes 330 und 320, welche jeweils ein oberes und ein unteres, kontinuierlich in Bewegungsrichtung des Stranges 4 (siehe Pfeil) mit Strangbewegungs-Geschwindigkeit mitlaufendes "Wandelement" bilden, auf. Die Bänder 330 und 320 können - jeweils der Stranggeschwindigkeit entsprechend - geschwindigkeitsgeregelt angetrieben werden, aber auch als "Mitlauf-Bänder" ausgebildet sein. Über eine Zuführung 280 im der Flachdüse 260 nahen Ausstoß-Bereich 250 des - nicht vollständig gezeigten - Zylinders des Extruders 20 kann ein Oberflächen-Beschichtungsmedium zugeführt werden, das infolge des dann folgenden Auspressens zusammen mit der Grundmasse besonders integral an den Strang 40 gebunden wird.

Mit unterbrochenen Linien angedeutet ist eine andere Oberflächenbeschichtungs-Einrichtung 50, welche sich quer über den gerade die Düse 260 verlassenden, sich im Zustand der Expansion befindlichen Bereich 410 des Stranges 40 erstreckt und an ihrer Unterseite Auslaßöffnungen zur gleichmäßigen Verteilung eines über eine Zuleitung 510 zugeführten Oberflächen-Beschichtungsmediums aufweist. Eine gleichartige Einrichtung kann selbstverständlich zur Versorgung der Strangunterseite mit einem Beschichtungsmedium vorgesehen sein.

Es ist selbstverständlich, daß für den Fall, daß eine strukturierte Oberfläche der expandierten Leichtplatten 40 gewünscht wird, die Endlosbänder 330 und 320 entsprechende Oberflächenausbildung aufweisen können, wobei deren Ausstattung mit einem adhäsionsmindernden Belag, wie oben erwähnt, besonders vorteilhaft ist.

Schließlich ist weiterer wesentlicher Gegenstand der vorliegenden Erfindung eine neue Verwendung der Formkörper, für Strukturelemente, z.B. für Möbel und Bauten, Isolierung und/oder Verpackung, vorzugsweise von Faserprofilen und/oder -platten, auf Basis der vorher beschriebenen Komponenten . Es werden in vorteilhafter Weise Formkörper für diese Zwecke verwendet, welche die im kennzeichnenden Teil des Anspruches 21 zusammengefaßte Merkmals-Kombination aufweisen. Sie stellen mechanisch ausgezeichnet feste, resistente, "leichte", einfach zu manipulierende, z.B. problemlos zuschneid- und schleiffähige, eventuell auch granulatartige Formkörper mit gefälligem Äußeren und hoher Lebensdauer dar, deren Anwendungsgebiete nicht abgrenzbar sind und vom Bauwesen über Innenarchitektur, Fahrzeug- und Automobilbau bis zur effizienten Leicht-Verpackung reichen.

Bei Verwendung der Formkörper gemäß Anspruch 22 oder 23 sind jeweils die entsprechenden, schon vorher bei den einzelnen Verfahrensvarianten beschriebenen Vorteile gegeben.

Die Verwendung von Formkörpern mit einer Textur gemäß Anspruch 24 bringt den Vorteil hoher Resistenz gegen Aufnahme von Flüssigkeiten, insbesondere Wasser. Sie können daher auch in Bereichen erhöhter Feuchte, z.B. in Tropen, in Kellerräumen oder als Verpackungsmaterial für Frischobst oder -fleisch verwendet werden, dann ganz besonders, wenn sie zusätzlich mit Hydrophob-Mitteln gemäß Anspruch 9 ausgerüstet sind. Mit ihrer schaumartigen Textur weisen diese Formkörper besonders hohe Festigkeit und Isotropie ihrer mechanischen und Bearbeitungseigenschaften auf. Formkörper mit in diesem Anspruch genannten Dichten sind wegen ihrer "Leichtigkeit" bei immer noch gewährleisteter, ausreichender mechanischer Stabilität zu bevorzugen.

Die Vorteile, welche die Verwendung der Formkörper mit herabgesetzter Dichte und einer Beschichtung gemäß Anspruch 25 bringen kann, gehen über die schon erörterten Vorteile hinaus. Durch die Beschichtung wird neben der Oberflächen-Veredelung ein die Stabilität und Verzugsarmut zusätzlich fördernder Sandwich-Effekt erzielt.

Eine Verwendung von insbesondere plattenförmigen, expandierten, Formkörpern mit Festigkeitswerten gemäß Anspruch 26 hat den Vorteil, daß sie problemlos anstelle bisher üblicher Spanplatten der jeweiligen Dicke Einsatz finden können.

Anhand der folgenden Beispiele wird die Erfindung näher erläutert:

Beispiel 1:

Herstellung einer expandierten Holzfaserplatte

Es werden 60 Gew.-% Holzschnitzel in der Größe zwischen 0 bis 3 mm mit einer Restfeuchte von 12%, 35 Gew.-% Cassavamehl mit einer Feuchte von 12% und 5 Gew.-% Tallhart, jeweils in festem Zustand, in einen konischen Doppelschneckenextruder dosiert, dessen Betrieb so eingestellt wird, daß eine Massetemperatur von 160°C und ein Massedruck von 150 bar in Düsennähe erreicht wird. Die plastisch gelartig geschmolzene Masse wird durch eine temperierbare Flachdüse gepreßt und durch plötzliche Druckentlastung unter Einstellung des Expansionsindex auf 3 in eine Endlosplatte übergeführt, die anschließend in weitere Verarbeitungsbereiche transportiert wird.

Die platte hatte eine dichte Oberfläche, eine Dicke von 20 mm, eine Dichte von 0,48 t/m$^3$ und eine Biegebruchfestigkeit von 14,2 N/mm$^2$.

Beispiel 2:

Einem Zweischneckenextruder wurden Reisbruch und Naturkautschuk im Mengenverhältnis 70 Gew.-% zu 29 Gew.-% über getrennte Dosiereinrichtungen kontinuierlich zugeführt.

Im Bereich der Abdichtungszone wurde in den Extruder kontinuierlich jeweils soviel Wasser (etwa im Bereich von 2 bis 10 Gew.-%, bezogen auf 99% Ausgangsstoffe) über eine Zuleitung zugeführt, daß eine Grundmasse mit einheitlichem Wassergehalt von 14 Gew.-% in die Kompressionszone des Extruders gefördert wurde. Über eine andere Leitung wurde in den "Weiterverarbeitungsbereich" des Extruders, bezogen auf feste Ausgangskomponenten 1 Gew.-% 60%-ige wässerige Paraffinemulsion eingebracht. Die Massetemperatur betrug während eines stabilen kontinuierlichen Betriebes 165°C, der Druck der Grundmasse 200 bar. Es wurden durch zwei kreisrunde Öffnungen von 1,5 cm Durchmesser unter Einstellung des Expansionsindex auf 6 Rundstränge kontinuierlich ausgepreßt und im noch langsam expandierenden Zustand mit einem Rotationsmesser in ein Kleinkugel-Granulat zerteilt. Der erhaltene, annehmbar aussehende Verpackungsfüllstoff war wasserfest, elastisch, wies dennoch hohe Rückstellkräfte auf und zeigte schließlich nach Entsorgung gute Verrottungseigenschaften.

Beispiel 3:

Es wurde - wie in Beispiel 2 beschrieben - verfahren, nur mit dem Unterschied, daß außer Reisbruch zu 70 Gew.-% weniger Naturkautschuk als dort, nämlich 24 Gew.-%, und zusätzlich 5 Gew.-% Zellstoff als biogenes Fasermaterial in den Extruder dosiert wurden und über eine Flachdüse ein Verpackungs-Folienmaterial von etwa 1,5 mm Dicke gepreßt wurde.

Es wurde ein elastisches, formbeständiges, minderdichtes Vlies erhalten, das mit steigendem Druck proportional steigende Rückstellkräfte und hohe Reißfestigkeit zeigte.

Beispiel 4

Es wurden folgende Komponenten und Bedingungen für die Extrusion gewählt:

| | |
|---|---|
| Kartoffelstärke: | 67,5 Gew.%, |
| Phthalsäureanhydrid: | 2,5 Gew.-% |
| pH-Wert | 8 bis 11 (mit NaOH (30%-ig) eingestellt) |
| Zellstoff (aus Papierindustrie) | 30% |
| Wassergehalt in der Gesamtmischung auf | 16 Gew.-% eingestellt |

Betriebsbedingungen:

| | |
|---|---|
| Expansionsindex | 4,5 |
| Dichte | 0,25 t/m³ |
| Massetemperatur | 150°C |
| Massedruck | 120 bar. |

Es wurden platten mit 3,5 mm Dicke erhalten, welche sich hervorragend als Material für Obstverpackungen, Warmhaltebehälter für Frisch-Imbisse u.dgl. eignen, jedoch für eine Entsorgung die nötige "Knackigkeit" für eine Zerkleinerung aufwiesen.

Beispiel 5:

Eine Grundmasse mit der Zusammensetzung

| | |
|---|---|
| Maisgrieß | 37 Gew.-% |
| Polyäthylen | 10 Gew.-% |
| Weichholzschnitzel | 50 Gew.-% (1 bis 10 mm Partikelgröße) |
| Leinöl | 3 Gew.-% |

wurde in einem Einschneckenextruder zu einer Leicht-Spanplatte von 24 mm Stärke verpreßt. Der Expansionsgrad betrug 3,0, die Dicke der erhaltenen Platte 0,3 t/m³.

Die Arbeitsbedingungen waren folgende:

| | |
|---|---|
| Massetemperatur | 145°C |
| Massedruck | 90 bar |

Das erhaltene Holzspanplattenprodukt war auch bei tropenähnlichen Bedingungen wasserfest, wies eine Biegesteifigkeit von 13,8 auf und war von angenhem gelblich-brauner Farbe.

**Patentansprüche**

1. Verfahren zur Herstellung von Bau-, Struktur- oder Verpackungsmaterial unter bildung von Formkörpern aus wasserfeuchtem, natürlichem faserhaltigem oder faserförmigem Material und Bindemittel durch Vermischen und Verdichten in einem Schneckenextruder mit anschliessender Formdüse, dadurch gekennzeichnet, daß:

   a) als Bindemittel mindestens ein biopolymerer, natürlicher Stoff aus mindestens einer der Gruppen Stärken, Dextrine, Pektine, Kollagene, Eiweiße oder Kaseine eingesetzt wird,

7

EP 0 477 203 B1

b) die Wasserfeuchtigkeit der Mischung, bezogen auf die Gesamtmasse,auf 6 - 25 % eingestellt wird,
c) im Schneckenextruder durch Verdichtung und Scherwirkung eine Druck- und Temperaturerhöhung der Mischung bis zur Gelschmelze des Bindemittels herbeigeführt wird,
d) die Gelschmelze-Mischung unmittelbar nach ihrer bildung derart druckentlastet wird, daß unter spontaner Expansion und Dampfbildung aus der feinverteilten Feuchte ein Faser- und/oder Spanformkörper mit einer gegenüber herkömmlichen solchen Körpern geringeren Dichte und im wesentlichen dichter Oberfläche gebildet wird.

2. Verfahren nach Anspruch 1, dadurch gekennzeichnet, daß als Bindemittel Stärke eingesetzt wird, die bevorzugt zumindest teilweise durch Stärke enthaltende Pflanzenteile aus mindestens einer der Gruppen der Zerealien, Körnerfrüchte, Getreide sowie stärkehältige Wurzeln, Knollen und Stämme in zerkleinertem oder nativem Zustand ersetzt ist.

3. Verfahren nach Anspruch 1 oder 2, dadurch gekennzeichnet, daß das faserhaltige oder faserförmige Material aus mindestens einer der Gruppen der Holzschnitzel, Pflanzenfasern, Zellstoffmaterialien, recyclisierte Zellstoffmaterialien, Papiermaterialien und recyclisierte Papiermaterialien ausgewählt wird.

4. Verfahren nach einem der Ansprüche 1 bis 3, dadurch gekennzeichnet, daß die Gelschmelze-Mischung im Extruder durch Wirkung der dort erfolgenden mechanischen Beanspruchung, Scherwirkung und Druckzunahme auf Temperaturen von über 100°C, insbesondere im Bereich von 125 bis 250°C, erhitzt und auf Drücke von 15 bis 600 bar, insbesondere im Bereich von 20 bis 250 bar, komprimiert wird.

5. Verfahren nach einem der Ansprüche 1 bis 4, dadurch gekennzeichnet, daß die Mischung bei der Bildung der Gelschmelze im Extruder einer spezifischen mechanischen Energieeinleitung ("SME") von 0,05 bis 0.7 kWh/kg, insbesondere von 0,1 bis 0,3 kWh/kg, unterworfen wird.

6. Verfahren nach einem der Ansprüche 1 bis 5, dadurch gekennzeichnet, daß die den Extruder unmittelbar verlassende Gelschmelze-Mischung unter Einhaltung eines Expansionsindex von zumindest 1,1, insbesondere von 2 bis 8, der spontanen Druckentlastung unterworfen wird.

7. Verfahren nach einem der Ansprüche 1 bis 6, dadurch gekennzeichnet, daß eine Mischung mit einem Gehalt an biopolymerem Bindemittel von 5 bis 85 Gew.-%, insbesondere von 10 bis 50 Gew.-%, jeweils bezogen auf trockene Grundmasse, der Extrusion mit Expansion unterworfen wird.

8. Verfahren nach einem der Ansprüche 1 bis 7, dadurch gekennzeichnet, daß eine Mischung mit einem Zusatz eines mit Wasser mischbaren, flüssigen Expansionsmittels aus einer der Gruppen der Alkohole oder Ketone, welche bei Normaldruck im Bereich von 70 bis 180°C sieden, der Extrusion mit Expansion unterworfen wird.

9. Verfahren nach einem der Ansprüche 1 bis 8, dadurch gekennzeichnet, daß eine Mischung mit zumindest einem das Stärkematerial des bindemittels in seinen Eigenschaften modifizierenden Hydrophobiermittel, aus mindestens einer der Gruppen der natürlichen oder synthetischen Öle, Wachse, Fette, Harze, Kautschuke, Paraffine, Silikone und Kunststoffe der Extrusion mit Expansion unterworfen wird.

10. Verfahren nach einem der Ansprüche 1 bis 9, dadurch gekennzeichnet, daß eine Mischung mit zumindest einem bei Extrusionsbedingungen zur Ausbildung von Vernetzungsbrücken zwischen Molekülen des biopolymeren bindemittels, bevorzugt Stärke-Molekülen, fähigen, zumindest bifunktionellen Modifikator aus mindestens einer der Gruppen der kurzkettigen Di- oder Polycarbonsäuren, Di- oder Poly(thi)ole und deren Derivate, der tertiäre Aminogruppen enthaltenden Moleküle sowie der Polyphosphorsäuren, der Extrusion mit Expansion unterworfen wird.

11. Verfahren nach einem der Ansprüche 1 bis 10, dadurch gekennzeichnet, daß die Oberfläche des bei der Extrusion gebildeten Stranges der Schmelzegel-Mischung noch vor Verlassen des Extruders mit einer peripheral zugeführten, beschichtungsbildenden Masse, bevorzugt Harz oder Kleber, beaufschlagt wird.

12. Verfahren nach einem der Ansprüche 1 bis 11, dadurch gekennzeichnet, daß die Oberfläche des bei der Extrusion gebildeten Stranges der Schmelzegel-Mischung unmittelbar nach Verlassen des Extruders, bevorzugt vor Abschluß der spontanen Expansion, mit einer Beschichtung beaufschlagt wird.

13. Verfahren nach einem der Ansprüche 1 bis 12, dadurch gekennzeichnet, daß der im Extruder gebildete und unmittelbar nach deren Verlassen spontan expandierende Strang zur Erzielung eines gewünschten Querschnittes bzw. Profiles einer Expansionsbegrenzung unterworfen wird.

14. Verfahren nach einem der Ansprüche 1 bis 13, dadurch gekennzeichnet, daß der Strang während der spontanen Expansion, vorzugsweise während der Strangbegrenzung, mit einer Oberflächen-beschichtung, insbesondere Beschichtungsfolie, beaufschlagt bzw. verbunden wird.

15. Vorrichtung zur Durchführung des Verfahrens nach einem der Ansprüche 1 bis 14, mit Einrichtungen zur Zerkleinerung und/oder Konditionierung und/oder Vormischung der Ausgangs-Komponenten und Einrichtungen für deren dosierte Zuführung zu einem Extruder mit zumindest einer formgebenden Extrusionsöffnung, dadurch gekennzeichnet, daß der Einrichtungen (10,11,12) für eine Dosierung der in festem Zustand zuführbaren, stückigen bzw. kleinteiligen Ausgangskomponenten aufweisende Schneckenextruder (2,20) einen stromaufwärts der Ausstoßdüse (26,260) angeordneten Verarbeitungsbereich (204) zur partiellen Druckentlastung für eine interne partielle Expansion der zu verarbeitenden Mischung aufweist.

16. Vorrichtung zur Durchführung des Verfahrens nach einem der Ansprüche 1 bis 14, bzw. Vorrichtung nach Anspruch 15, dadurch gekennzeichnet, daß sie eine im wesentlichen unmittelbar an die Extrusionsöffnung (26,260) anschließende Einrichtung (3,30) zur Begrenzung der Spontanexpansion des Stranges (4,40) mit auf die jeweilige Strangbewegungs-Geschwindigkeit bringbaren oder einstellbaren, Abwälz- und/oder Mitlauf-Elementen (32,33,320,330) aufweist.

17. Vorrichtung nach Anspruch 15 oder 16, dadurch gekennzeichnet, daß die Abwälz-Elemente (32,33) der Strangbegrenzungseinrichtung (3,30) mit im wesentlichen quer zur Strangbewegungsrichtung einem gewünschten Querschnitt bzw. Profil des expandierten Stranges (4,40) entsprechend angeordneten oder ausgebildeten, mitlaufenden oder der Strangbewegungsgeschwindigkeit entsprechend steuerbar antreibbaren, Walzen (32,33), mit adhäsionsmindernder, glatter oder strukturierter, Oberfläche gebildet sind.

18. Vorrichtung nach einem der Ansprüche 15 bis 17, dadurch gekennzeichnet, daß die Mitlauf-Elemente (320,330) der Strangbegrenzungseinrichtung (30) mit im wesentlichen in Strangbewegungs-Richtung und im wesentlichen mit Strangbewegungs-Geschwindigkeit bewegbaren, einem gewünschten Querschnitt bzw. Profil des expandierten Stranges (40) entsprechend ausgebildeten oder angeordneten Wand-Elementen oder Endlosbändern (320,330) mit adhäsionsmindernder, glatter oder strukturierter, Oberfläche gebildet sind.

19. Vorrichtung nach einem der Ansprüche 15 bis 18, dadurch gekennzeichnet, daß sie mindestens eine Einrichtung (5) zur im wesentlichen mit Strangbewegungs-Geschwindigkeit erfolgenden, kontinuierlichen Zuführung von Strang-Beschichtungsfolien (50) zwischen Strang-Oberfläche und den Abwälz- und/oder Mitlauf-Elementen (32,33) der Strangbegrenzungs-Einrichtung (3) aufweist.

20. Vorrichtung nach einem der Ansprüche 15 bis 19, dadurch gekennzeichnet, daß der Extruder (2) mehrere in räumlicher Nähe der Düse (26) in den Ausstoßbereich (205) des Extruderraums über dessen Innen-Umfang verteilt mündende Zuleitungen (208) für unter Druck zuführbare Strangoberflächen-Beschichtungs- oder Beleimungs-Medien aufweist.

21. Verwendung eines mit mindestens einem wasserfeuchten, natürlichen, faserhaltigen oder faserförmigen Material und mindestens einem Bindemittel gebildeten Formkörpers als bau-, Möbelbau-, Struktur-, Isolier- oder Verpackungsmaterial mit der Maßgabe, daß der Formkörper eine im wesentlichen dichte Strangoberfläche aufweist und mit mindestens einer unmittelbar nach einer Extrusion spontan expandierten Gelschmelze-Mischung gebildet ist, in welcher Partikel eines kleinteiligen, faserhältigen und/oder faserförmigen biogenen, hochmolekularen Materials innerhalb einer eine Vielzahl kleindimensionierter Hohlräume aufweisenden, im wesentlichen strukturgebenden Matrix auf Basis einer nach Einwirkung von erhöhter Temperatur, erhöhtem Druck und/oder mechanischer Beanspruchung verfestigten Schmelze eines mit mindestens einem biopolymeren natürlichen Stoff aus mindestens einer der Gruppen Stärken, Dextrine, Pektine, Kollagene, Eiweiße oder Kaseine gebildeten Bindemittels angeordnet sind, wobei der Anteil des Bindemittels 5 bis 85 Gew.-%, vorzugsweise 10 bis 50 Gew.-%, jeweils bezogen auf trockene Grundmasse beträgt.

22. Verwendung eines wie im Anspruch 21 angegebenen Formkörpers mit der Maßgabe, daß er nach einem Verfahren gemäß einem der Ansprüche 1 bis 14 erhalten ist, für den im Anspruch 21 genannten Zweck.

23. Verwendung eines wie im Anspruch 21 oder 22 angegebenen Formkörpers mit der Maßgabe, daß er mit einer Vorrichtung gemäß einem der Ansprüche 15 bis 20 hergestellt ist, für den im Anspruch 21 genannten Zweck.

24. Verwendung eines wie in einem der Ansprüche 21 bis 23 angegebenen Formkörpers, mit der Maßgabe, daß er im wesentlichen jeweils voneinander getrennte, kleindimensionierte Hohlräume und eine unterhalb der Gesamt-Dichte der ihn aufbauenden nichtgasförmigen Komponenten liegende Dichte von 0,05 bis 1,0 t/m³, bevorzugt von 0,1 bis 0,4 t/m³, aufweist, für den im Anspruch 21 genannten Zweck.

25. Verwendung eines wie in einem der Ansprüche 21 bis 24 angegebenen Formkörpers mit der Maßgabe, daß er eine mit der Oberfläche des extrudierten, spontan expandierten Stranges verbundene Beschichtung aufweist, für den im Anspruch 21 genannten Zweck.

26. Verwendung eines wie in einem der Ansprüche 21 bis 25 angegebenen, insbesondere als Holzspan- bzw. Flachpreßplatte, vorliegenden, Formkörpers mit der Maßgabe, daß er bei einer Materialstärke in den Bereichen 13 - 20 - 25 - 32 - 40 - 50 mm Werte der Biegefestigkeit von mindestens 14,5, 13,5, 13, 11, 9,5 und 7 N/mm² aufweist, für den im Anspruch 21 genannten Zweck.

## Claims

1. A process for the manufacture of materials for use in the construction industry, or as structural or packaging materials, made by producing shaped parts from moist, natural, fibre-containing or fibre-shaped material and a binder, which are mixed and compacted in a screw extruder having a shape-imparting nozzle attached, characterized in that:
   a) at least one biopolymeric, natural material is used from at least one of the following groups: starches, dextrins, pectins, collagens, proteins or caseins,
   b) the water content of the mixture, relative to the total mass, is adjusted to 6 - 25%,
   c) through the effects of compaction and shear forces applied in the screw extruder, the pressure and temperature of the mixture is increased until the binder melts to form a gel,
   d) immediately after it is formed, the molten gel mixture is decompressed in such a way that as the finely dispersed moisture content undergoes spontaneous expansion and turns to steam, a fibre and/or chip-based shaped part is formed which has a lower overall density but a substantially denser surface than conventional shaped parts of similar type.

2. A process according to Claim 1 characterized in that starch is used as the binder, and it is preferably replaced at least partially by starch-containing plant parts taken from at least one of the groups of cereals, grains, and starch-containing roots, tubers and stems, either comminuted or in their natural state.

3. A process according to Claims 1 or 2, characterized in that the fibre-containing or fibre-shaped material is selected from at least one of the groups of wood chips, plant fibres, cellulose materials, recycled cellulose materials, paper materials and recycled paper materials.

4. A process according to one of the Claims 1 to 3, characterized in that the molten gel mixture is heated in the extruder to temperatures in excess of 100°C, and in particular in the range of 125 to 250°C, by the action of the mechanical stresses, shear forces and increased pressure, and it is compressed to pressures of 15 o 600 bar, in particular pressures in the range from 20 to 25 bar.

5. A process according to one of the Claims 1 to 4, characterized in that as the molten gel forms in the extruder, the mixture is subjected to a specific mechanical energy input of 0.05 to 0.7 kWh/kg, and in particular 0.1 to 0.3 kWh/kg.

6. A process according to one of the Claims 1 to 5, characterized in that the molten gel mixture immediately emerging from the extruder undergoes spontaneous decompression while maintaining an expansion index of at least 1.1, and in particular 2 to 8.

7. A process according to one of the Claims 1 to 6, characterized in that a mixture containing 5 to 85 wt.%, and in particular 10 to 50wt.%, biopolymeric binder relative to the dry extrusion mass, is subjected to extrusion and expansion.

8. A process according to one of the Claims 1 to 7, <u>characterized in that</u> a mixture containing an addition of a liquid expansion agent, which is miscible with water and taken from either the alcohol group or the ketone group, which boil in the range from 70 to 180°C under normal pressure, is subjected to extrusion and expansion.

9. A process according to one of the Claims 1 to 8, <u>characterized in that</u> a mixture containing at least one hydrophobic agent modifying the starch material of the binder and selected from at least one of the groups of natural or synthetic oils, waxes, fats, resins, rubbers, paraffins, silicones and plastics, is subjected to extrusion and expansion.

10. A process according to one of the Claims 1 to 9, <u>characterized in that</u> a mixture containing at least one at last bifunctional modifying agent capable of forming cross-linking bridges between molecules of the biopolymeric binder, preferably starch molecules, under the conditions of extrusion, the said modifier being chosen from at least one of the groups of short-chained di- or polycarboxylic acids, di- or poly(thi)ols and their derivatives, molecules containing tertiary amino acid groups, and polyphosphoric acids, is subjected to extrusion and expansion.

11. A process according to one of the Claims 1 to 10, <u>characterized in that</u> the surface of the extruded product made from the molten gel mixture is coated with a peripherally supplied coating mass, preferably resin or adhesive, before the product emerges from the extruder.

12. A process according to one of the Claims 1 to 11, <u>characterized in that</u> the surface of the extruded product made fro the molten gel mixture is coated immediately after it emerges from the extruder and preferably before the spontaneous expansion is completed.

13. A process according to one of the Claims 1 to 12, <u>characterized in that</u> the extruded product formed in the extruder spontaneously starts to expand immediately after it emerges from the extruder and this expansion is then limited in order to achieve the desired cross-sectional dimensions or profile section.

14. A process according to one of the Claims 1 to 13, <u>characterized in that</u> as the extruded product undergoes spontaneous expansion, and preferably while the expansion process is being limited, a surface coating, and in particular a coating foil, is applied or bonded to to the extruded product.

15. A machine for implementing the process according to one of the Claims 1 to 14, the said machine being fitted with devices for comminuting and/or conditionoing and/or pre-mixing the starting components and also with devices for feeding these components to an extruder having at least one shape-determining extrusion opening, <u>characterized in that</u> the screw extruder (2, 20), which possesses devices (10, 11, 12) for supplying the preferably solid, lump-shaped or small-particled starting components, is provided upstream of the extrusion nozzle (26, 260) with a processing zone (204) in which partial decompression, causing partial internal expansion, of the mixture being processed is carried out.

16. A machine for implementing the process according to one of the Claims 1 to 14, or a machine according to Claim 15, <u>characterized in that</u> essentially immediately following the extrusion opening (26, 260), it posssesses a device (3, 30) for limiting the spontaneous expansion of the extruded product (4, 40) by means of roller and/or continous belt elements (32, 33, 320, 330) which can be brought or adjusted to the respective speed of advance of the extruded product.

17. A machine according to Claims 15 or 16, <u>characterized in that</u> the roller elements (32, 33) of the dimension-limiting device (3, 30) are oriented essentially transverse to the direction of movement of the extruded product and are arranged or shaped according to the desired cross section or profile of the expanded, extruded product (4, 40), and the said rollers (32, 33) are provided with a non-stick, possibly structured surface and they may rotate freely in contact with, or they may be driven at a speed matched to the speed of advance of, the extruded product.

18. A machine according to one of the Claims IS to 17, <u>characterized in that</u> the elements (320, 330) of the dimension-limiting device (30) take the form of wall elements or endless belts (32, 330), with a non-stick, smooth or structured surface, running essentially in the direction of motion of the extruded product at essentially the speed of advance of the extruded product, and shaped or arranged according to the desired cross section or profile of the expanded, extruded product (40).

19. A device according to one of the Claims 15 to 18, <u>characterized in that</u> it possesses at least one device (5) for continuously feeding product-coating foils (50), at essentially the same rate of advance as the extruded product, into the gap between the surface of the product and the roller and/or belt elements (32, 33) of the dimension-limiting device (3).

20. A device according to one of the Claims 15 to 19, <u>characterized in that</u> the extruder (2) has several feed pipes (208_ discharging close to the nozzle (26) into the exit area (205) of the extruder chamber. The pipes are distributed around the inner periphery of the chamber and they supply surface-coating and/or gluing media under pressure.

21. The use of a shaped part produced from at least one moist, natural, fibre-containing material and at least one binder, and used to manufacture construction material, furniture material, structural material, insulating material or packaging material, <u>characterized in that</u> the shaped part possesses an essentially dense surface and is formed from at least one melted gel mixture which undergoes spontaneous expansion immediately after being extruded and in which small particles of a fibre-containing and/or fibre-shaped biogenic, high-molecular material are distributed within an essentially structure-determining matrix containing a large number of small cavities, the said matrix being based on a melt of a binder formed with at least one biopolymeric natural substance taken from at least one of the groups of starches, dextrins, pectins, collagens, proteins or caseins, the said melt being hardened following the application of elevated temperature, elevated pressure and/or mechanical stress, and the percentage of the binder is 5 to 85 wt.%, and preferably 10 to 50 wt.%, relative to the dry extrusion mass.

22. The use of a shaped part as described in Claim 21, provided that it is obtained according to a process as outlined in one of the Claims 1 to 14, for the purpose referred to in Claim 21.

23. The use of a shaped part as described in one of the Claims 21 or 22, provided that it is manufactured with a machine according to one of the Claims 15 to 20, for the purpose referred to in Claim 21.

24. The use of a shaped part as described in one of the Claims 21 to 23, provided that it contains essentially discrete, small-dimensioned cavities and possesses a density lower than the overall density of the non-gaseous components of which it is made up, namely 0.05 to 1.0 $t/m^3$, and preferably 0.1 to 0.4 $t/m^3$, for the purpose referred to in Claim 21.

25. The use of a shaped part as described in one of the Claims 21 to 24, provided that it possesses a coating bonded to the surface of the extruded, spontaneously expanded product, for the purpose referred to in Claim 21.

26. The use of a shaped part, in particular a wood chipboard or a laminated flat pressed board, provided that it possesses a thickness in the ranges 13 - 20 - 25 - 32 - 40 - 50 mm coupled with bending strength values of at least 14.5, 13.5, 13, 11, 9.5 and 7 $N/mm^2$, for the purpose referred to in Claim 21.


**Revendications**

1. Procédé de fabrication d'un matériau pour la construction, les structures, l'emballage avec formation de pièces moulées en matières humides, à teneur en fibres naturelles ou en forme de fibres et avec un liant, par mélange et compression dans une extrudeuse à vis avec filière de forme, caractérisé en ce que :
   a) l'on utilise comme liant une matière naturelle biopolymère faisant au moins partie de l'un des groupes amidons, dextrines, pectines, collagènes, albumines, ou caséines,
   b) l'on a réglé la teneur en eau du mélange à 6 - 25% rapportés à la masse totale,
   c) l'on produit dans l'extrudeuse à vis, par compression et cisaillement, une augmentation de la pression et de la température jusqu'à la gélification du liant
   d) la pression du mélange à l'état de gel se détend immédiatement après sa formation de telle manière qu'en présence d'une expansion spontanée et d'une production de vapeur à partir de l'humidité finement répartie, il se forme un produit constitué de fibres et/ou de copeaux moulés d'une plus faible densité que,, les produits conventionnels et présentant une surface nettement plus dense.

2. Procédé suivant revendication 1, caractérisé en ce que l'on utilise comme liant de l'amidon, remplacé de préférence par des substances végétales contenant de l'amidon, au moins partiellement, provenant d'au moins un des groupes de céréales, graines, racines, tubercules contenant de l'amidon, à l'état broyé ou natif.

3. Procédé suivant revendication 1 ou 2, caractérisé en ce que l'on choisit la matière à teneur en fibres ou en forme de fibres dans au moins un des groupes de particules de bois, fibres végétales, matières cellulosiques, matières cellulosiques recyclées, papiers et papiers recyclés.

4. Procédé suivant revendication 1 à 3, caractérisé en ce que le mélange à l'état de gel est comprimé dans l'extrudeuse sous l'effet des sollicitations mécaniques, du cisaillement et de l'augmentation de pression à des températures dépassant 100°C, en particulier dans une plage allant de 125 à 250°C et à des pressions allant de 15 à 600 bar, en particulier sur une plage de 20 à 250 bar.

5. Procédé suivant l'une des revendications 1 à 4, caractérisé en ce que le mélange est soumis à un apport d'énergie mécanique spécifique ("SME") de 0,05 à 0,7 kWh/kg, en particulier de 0,1 à 0,3 kWh/kg.

6. Procédé suivant l'une des revendications 1 à 5, caractérisé en ce que le mélange à l'état de gel, quittant directement l'extrudeuse, en respectant un indice d'expansion d'au moins 1,1, en particulier allant de 2 à 8, est soumis à une décompression spontanée.

7. Procédé suivant l'une des revendications 1 à 6, caractérisé en ce qu'un mélange ayant une teneur en liant biopolymère de 5 à 85% en poids, en particulier de 10 à 50% en poids rapporté à la matière sèche, est soumis à une extrusion avec expansion.

8. Procédé suivant l'une des revendications 1 à 7, caractérisé en ce qu'un mélange avec une addition d'un agent d'expansion liquide, miscible avec l'eau, d'un des groupes des alcools ou cétones bouillant sous une pression normale à une température de 70 à 180°C, est soumis à une extrusion avec expansion.

9. Procédé suivant l'une des revendications 1 à 8, caractérisé en ce qu'un mélange contenant au moins un agent hydrophobe modifiant les propriétés de l'amidon du liant, agent hydrophobe d'au moins un des groupes des huiles naturelles ou synthétiques, cires, graisses, résines, caoutchoucs, paraffines, silicones et matières plastiques, est soumis à une extrusion avec expansion.

10. Procédé suivant l'une des revendications 1 à 9, caractérisé en ce qu'un mélange contenant au moins un modificateur bifonctionnel, susceptible, dans des conditions d'extrusion, de former des ponts de réticulation entre les molécules du liant biopolymère, de préférence des molécules d'amidon, modificateur provenant d'au moins un des groupes des acides di- ou polycarboxyliques à chaîne courte, des di- ou polythiols et de leurs dérivés, des molécules contenant des groupes aminos tertiaires, ainsi que des acides polyphosphoriques, est soumis à une extrusion avec expansion.

11. Procédé suivant l'une des revendications 1 à 10, caractérisé en ce que la surface du boudin de mélange à l'état de gel formé lors de l'extrusion, est sollicité avant de quitter l'extrudeuse par une matière formant une enduction, de préférence une résine ou une colle, introduite par la périphérie.

12. Procédé suivant l'une des revendications 1 à 11, caractérisé en ce que la surface du boudin de mélange à l'état de gel formé lors de l'extrusion, est sollicité immédiatement après avoir quitté l'extrudeuse par une matière formant une enduction, de préférence avant la fin de l'expansion spontanée.

13. Procédé suivant l'une des revendications 1 à 12, caractérisé en ce que le boudin formé dans l'extrudeuse, et expansé spontanément, est soumis immédiatement après avoir quitté l'extrudeuse, à une limitation de son expansion en vue d'obtenir la section ou le profil désiré.

14. Procédé, suivant l'une des revendications 1 à 13, caractérisé en ce que le boudin, au cours de son expansion spontanée, de préférence pendant la limitation de sa section, et soumis à une enduction de sa surface, reçoit en particulier une feuille d'enduction.

15. Dispositif pour l'exécution du procédé suivant l'une des revendications 1 à 14, avec des dispositifs de fragmentation et/ou de conditionnement et/ou de prémélange des composants de départ et des dispositifs d'introduction dosée dans une extrudeuse avec au moins un orifice d'extrusion de forme, caractérisé en ce que l'extrudeuse à vis (2,20) présentant des dispositifs (10, 11, 12) de dosage des composants de départ pouvant être introduits sous une forme solide, en morceaux ou en petits fragments, présente une zone de mise en oeuvre (204) disposée en amont de la filière (26, 250) pour une décompression partielle en vue d'un expansion interne partielle du mélange à mettre en oeuvre.

16. Dispositif pour l'exécution du procédé suivant l'une des revendications 1 à 14, ou dispositif suivant la revendication 15, caractérisé en ce qu'il présente un dispositif (3,30) branché sensiblement directement sur l'orifice d'extrusion (26,260) pour limiter l'expansion spontanée du boudin (4,40) avec des éléments de roulement et/ou éléments tournants (32, 33, 320, 330) pouvant être amenés ou réglés à la vitesse de déplacement du boudin.

17. Dispositif suivant l'une des revendications 15 ou 16, caractérisé en ce que les éléments de roulement (32, 33) du dispositif de limitation du boudin (3,30) sont conformés avec des rouleaux (32, 33) pouvant être commandés, pour une section ou profil du boudin expansé (4,40) désiré, sensiblement perpendiculaires au sens de déplacement du boudin, ayant une surface diminuant l'adhérence, lisse ou structurée.

18. Dispositif suivant l'une des revendications 15 à 17, caractérisé en ce que les éléments tournants (320, 330) du dispositif de limitation du boudin (30), mobiles sensiblement dans le sens de déplacement du boudin et sensiblement à la vitesse de déplacement du boudin.sont conformés avec une section ou profil du boudin expansé (40) désiré, avec des éléments avec une paroi, configurés ou disposés comme il convient, ou avec des bandes sans fin (320, 330) ayant une surface diminuant l'adhérence, lisse ou structurée.

19. Dispositif suivant l'une des revendications 15 à 18, caractérisé en ce qu'il présente au moins un dispositif (5) pour l'amenage continu s'effectuant sensiblement à la vitesse de déplacement du boudin, de feuilles de revêtement du boudin( 50) entre la surface du boudin et les éléments de roulement et/ou éléments tournants (32,33) du dispositif de limitation du boudin (3).

20. Dispositif suivant l'une des revendications 15 à 19, caractérisé en ce que l'extrudeuse (2) présente plusieurs tuyauteries d'arrivée (208) débouchant, à proximité de la filière (26) dans la zone d'éjection (205) de la chambre d'extrusion, tuyauteries réparties sur la périphérie intérieure, pour l'acheminement de fluides d'enduction ou d'encollage, arrivant sous pression sur la surface du boudin.

21. Utilisation d'un produit moulé composé d'au moins un matériau naturel humide à teneur en fibres ou en forme de fibres et d'au moins un liant, pour la construction, les meubles, les structures, l'isolation ou l'emballage, dans la mesure où la pièce moulée présente une surface du boudin sensiblement étanche, et est formée avec au moins un mélange à l'état de gel expansé spontanément après une extrusion, mélange dans lequel des particules d'une matière biogène de poids moléculaire élevé, finement divisée, à teneur en fibres ou en forme de fibres sont disposées à l'intérieur d'une matrice donnant sensiblement une structure présentant un grande nombre de cavités de petites dimensions, à base d'une masse fondue solidifiée sous l'action d'une température élevée, d'une pression élevée et/ou d'une sollicitation mécanique, masse constituée d'au moins une matière biopolymère naturelle faisant partie d'au moins un des groupes amidons, dextrines, pectines, collagènes, albumines, ou caséines, avec une proportion de liant de 5 à 85% en poids, de préférence de 10 à 50 % en poids rapportés au produit sec.

22. Utilisation d'un produit moulé comme indiqué dans la revendication 21, dans la mesure où celui-ci est fabriqué avec un dispositif suivant une des revendications 1 à 14, pour le but indiqué dans la revendication 21.

23. Utilisation d'un produit moulé comme indiqué dans les revendications 21 ou 22, dans la mesure où celui-ci est fabriqué avec un dispositif suivant une des revendications 15 à 20, pour le but indiqué dans la revendication 21.

24. Utilisation d'un produit moulé comme indiqué dans les revendications 21 à 23, dans la mesure où il.présente des cavités de petites dimensions, sensiblement séparées les unes des autres, et d'une densité de 0,05 à 1,0 t/m3, de préférence de 0,1 à 0,4 t/m3, située au-dessous de la densité globale des composants non gazeux qui le constituent, pour le but indiqué dans la revendication 21.

25. Utilisation d'un produit moulé comme indiqué dans les revendications 21 à 24, dans la mesure où il,présente une enduction sur un boudin extrudé, expansé spontanément, pour le but indiqué dans la revendication 21.

26. Utilisation d'un produit moulé comme indiqué dans les revendications 21 à 25, en particulier sous la forme de panneaux de copeaux de bois ou de panneaux de particules, dans la mesure où il,présente pour des épaisseurs de 13, 20, 25, 32, 40, 50 mm, des valeurs de résistance à la flexion d'au moins 14,5, 13,5, 13,11 9,5 et 7 N/mm2,pour le but indiqué dans la revendication 21.

Fig. 2

Fig. 1